# EUROPEAN PATENT SPECIFICATION

(11) **EP 4 246 291 B1**
(45) Date of publication and mention of the grant of the patent: **15.04.2026**
(21) Application number: 21900102.1
(22) Date of filing: 03.12.2021
(51) Int. Cl.: H04W 4/80, G06F 3/0354, G06F 3/038, G06F 3/039, H05B 47/155, H02J 50/10, H02J 50/60, H02J 50/80

(54) **METHOD FOR LINKAGE BETWEEN DEVICES AND ELECTRONIC DEVICE**
VERFAHREN ZUR VERBINDUNG ZWISCHEN VORRICHTUNGEN UND ELEKTRONISCHE VORRICHTUNG
PROCÉDÉ DE LIAISON ENTRE DISPOSITIFS ET DISPOSITIF ÉLECTRONIQUE

(30) Priority: 03.12.2020 CN 202011395372
(43) Date of publication of application: 20.09.2023
(73) Proprietor: Huawei Technologies Co., Ltd., Shenzhen, Guangdong 518129 (CN)
(72) Inventor: MOU, Yang, Shenzhen, Guangdong 518129 (CN)
(74) Representative: MERH-IP Matias Erny Reichl Hoffmann Patentanwälte PartG mbB
(86) International application number: PCT/CN2021/135388
(87) International publication number: WO 2022/117078

(56) References cited:
- WO-A1-2014/057343
- CN-A- 108 170 290
- CN-A- 109 309 990
- CN-A- 109 309 990
- CN-U- 210 640 712
- US-A1- 2016 360 598
- US-A1- 2019 073 179
- US-A1- 2020 059 110

## Description

### TECHNICAL FIELD

This application relates to the field of electronic technologies, and in particular, to a method for linkage between devices and an electronic device.

### BACKGROUND

With development of terminal products, requirements for interconnection and interworking between electronic devices in all scenarios gradually increase. For a plurality of electronic devices in interconnection and interworking, each electronic device may have different display effects. For example, each electronic device has different light effect display effects. The light effect display effects may include a color of a light, a flicker frequency, a multi-color cycle of colors, breathing, and the like.

In some specific scenarios, if each of a plurality of electronic devices in interconnection and interworking maintains different display effects, user experience is affected to some degree. For example, in a scenario in which a user plays a game, if a gaming mouse, a gaming mouse pad, and a gaming laptop have respective light effects such as different colors and different flicker frequencies, the visual sense of the user is affected, and game experience of the user deteriorates.
Document US 2019/073179 A1 relates to an electronic display band that comprises a circuit board and a plurality of components mounted to the circuit board. The plurality of components comprises one or more batteries, one or more integrated circuits, a first plurality of light emitting elements arranged in a grid, a second plurality of light emitting elements, and a wireless module. The wireless module comprises a radio and is configured to implement a bidirectional wireless mesh network using the radio.
Document US 2016/360598 A1 relates to a decorative lighting system that comprises a furniture item having an installed lighting unit, a wireless communication module connected with the light source, a power supply connected with the light source and the wireless communication module, and an enclosure for holding the light source, the wireless communication module, and the power supply. The installed lighting unit comprises a light source, and the wireless communication module is configured to wirelessly connect with one or more wireless communication devices. Document CN 109309990 A relates to a light synchronizing system. The synchronizing system includes a terminal module, an input-output module, a power supply module, and a master control module. The terminal module includes a synchronizing terminal and a synchronized terminal. The synchronizing terminal is used for sending a first synchronous signal to the input-output module. The synchronized terminal is used for receiving a second synchronous signal sent by the input-output module.

### SUMMARY

This application provides a method for linkage between devices and an electronic device. In the method, configuration information is carried in a pulse signal exchanged between the devices based on a wireless charging communication process between devices, to implement linkage between devices such as light effect linkage and clock linkage, so that a linkage effect of an overall light effect surrounding is formed between the devices, thereby improving user experience. The present invention is defined by the appended claims. In the following, parts of the description and drawings referring to former embodiments which do not necessarily comprise all features to implement embodiments of the claimed invention are understood to not represent embodiments of the invention but to relate to examples useful for understanding the embodiments of the invention.

According to a first aspect, a method for linkage between devices is provided, where the method is applied to a system including a source device and at least one receiving device, the source device has a first display effect, the at least one receiving device has a second display effect, and the method includes: establishing, by the source device, a wireless charging connection to the at least one receiving device; determining, by the source device, first configuration information based on the first display effect; sending, by the source device, the first configuration information to the at least one receiving device through the wireless charging connection; and synchronously modifying, by the at least one receiving device, the second display effect to the first display effect based on the first configuration information.

Optionally, the method for linkage between devices in this embodiment of this application may be applied to any two electronic devices such as a mouse, a mouse pad, a mobile phone, a tablet computer, a wearable device, an in-vehicle device, a notebook computer, and a netbook. The at least two electronic devices may exchange information through wireless transmission. A specific type of the electronic device is not limited in this embodiment of this application.

For example, a mouse is used as a source device, a mouse pad is used as a receiving device, and the mouse and the mouse pad may be wirelessly charged based on a wireless charging protocol. In this case, for a mouse and a mouse pad that can perform wireless charging, both the mouse and the mouse pad may include a wireless charging module, a microcontroller unit (microcontroller unit, MCU), a light effect module, a clock module, and the like.

In this embodiment of this application, configuration information that determines display effects of the mouse and the mouse pad may be referred to as "first configuration information". It should be understood that the first configuration information may include light effect information and clock information, that is, configuration parameters such as a color, a blinking mode, and a cycle mode of light effect modules of the mouse and the mouse pad at each time point may be determined based on the first configuration information.

In a possible implementation, the first configuration information may include the light effect information and the clock information of the mouse, that is, configuration parameters such as a color, a blinking mode, and a cyclic mode of a light effect module of the mouse at each time point may be determined based on the first configuration information. For example, for different use scenarios of the user, for example, a scenario of playing a game and a scenario of watching a video, the mouse and the mouse pad may correspondingly have different light effects. In other words, for different use scenarios, the mouse may determine different first configuration information based on a current light effect.

In another possible implementation, the first configuration information may be sent by using a pulse signal of a wireless charging module between the mouse and the mouse pad. For example, the first configuration information is carried in power configuration information transmitted by a charging coil of the mouse to a charging coil of the mouse pad.

Optionally, the first configuration information may be sent to the charging coil of the mouse pad by using the charging coil of the mouse in a form of a newly added pulse signal. A manner of sending the first configuration information is not limited in this embodiment of this application.

In conclusion, the process of linkage between devices is based on the wireless charging communication process, and may implement instruction interaction between a mouse and a mouse pad. The configuration information such as the light effect information and the clock information of the mouse is carried in the pulse signal exchanged between the mouse and the mouse pad, so that an MCU of the mouse pad adjusts its own originally set light effect mode of the mouse pad based on the configuration information such as the light effect information and the clock information, and implements clock alignment with the mouse, thereby achieving an effect of a light effect linkage between the mouse pad and the mouse. In this way, the mouse and the mouse pad can form overall light effect surrounding, thereby improving user experience.

It should be understood that the use scenario in this embodiment of this application includes a mouse and a mouse pad that can be wirelessly connected. In addition, the method for linkage between devices provided in this embodiment of this application may be further used for a plurality of devices. A quantity and a type of devices are not limited in this embodiment of this application.

Specifically, when the method for linkage between devices provided in this embodiment of this application is used for a plurality of devices, a connection manner between the plurality of devices is not limited to a wireless connection or a wired connection. The wireless connection may include establishing a Wi-Fi connection, a Bluetooth connection, an NFC connection, performing communication by using a future communication technology to exchange an instruction, or the like. The wired connection may include a universal serial bus (universal serial bus, USB) connection or the like. This embodiment of this application does not limit the connection manner between the plurality of devices.

For example, the plurality of devices may include a source device and at least one receiving device. A wireless connection or a wired connection is established between the source device and any one receiving device of the at least one receiving device, and a wireless connection or a wired connection may be established between the plurality of receiving devices. For example, the source device is a gaming laptop, and the receiving device may include a mouse, a mouse pad, and the like. A wireless connection or a wired connection may be established between the source device and the mouse, and a connection may be established between the mouse and the mouse pad in a wireless charging manner. This is not limited in this embodiment of this application.

With reference to the first aspect, in some implementations of the first aspect, the source device includes a first wireless charging module, the at least one receiving device includes a second wireless charging module, and the establishing, by the source device, a connection to the at least one receiving device includes: receiving, by the first wireless charging module of the source device, a first pulse signal sent by the second wireless charging module of the at least one receiving device; returning, by the source device, a second pulse signal to the at least one receiving device based on the first pulse signal, where the second pulse signal includes an identifier of the at least one receiving device; and determining, by the at least one receiving device, the at least one receiving device as a target device based on the identifier, and establishing a wireless connection to the target device.

With reference to the first aspect and the foregoing implementations, in some implementations of the first aspect, the sending, by the source device, the first configuration information to the at least one receiving device includes: sending, by the source device, a third pulse signal to the at least one receiving device by using the first wireless charging module, where the third pulse signal includes the first configuration information.

With reference to the first aspect and the foregoing implementations, in some implementations of the first aspect, the second pulse signal and the third pulse signal have different communication packet formats and/or packet transmission intervals.

Optionally, the first configuration information may be sent to the charging coil of the mouse pad by using the charging coil of the mouse in a form of a newly added pulse signal. A manner of sending the first configuration information is not limited in this embodiment of this application.

It should be understood that, in a wireless charging communication process, various different electrical signals may be implemented by using different communication packet formats. Specifically, different communication packets may correspond to different packet formats, that is, data encoding formats, modulation schemes, and the like. For example, a packet format may include a preamble part, a packet header part, and the like. The preamble part may generally include 11 to 25 1s. The packet header part may usually include 0X01, 0X51, 0X71, 0X03, 0X04, and the like. 0X01, 0X71, and 0X51 may indicate a packet transmission sequence, and an inter-packet interval is less than 21 milliseconds. The 0X03 and 0X04 packets may be sent in the process of charging, and a packet transmission interval may be less than 1.5 seconds or 23 seconds. A communication packet format and a packet transmission process of an electrical signal are not limited in this embodiment of this application.

With reference to the first aspect and the foregoing implementations, in some implementations of the first aspect, the third pulse signal further includes power configuration information, and the method further includes: determining, by the at least one receiving device, charging power based on the power configuration information, and charging the source device based on the charging power.

It should be understood that when the mouse pad wirelessly charges the mouse, the power of the transmitting coil may be adjusted by using a wireless communication mechanism. Specifically, in a process of charging a mouse, currents are different. For example, the charging current is 1 ampere (A) during normal charging, and the current decreases to dozens of milliamperes (mA) when a battery is fully charged. In this process, the mouse may send the power configuration information to the mouse pad, and the power of the transmitting coil of the mouse pad may be constantly adjusted and changed based on the power configuration information, just like a switching power supply, voltage feedback control is required, and details are not described herein again.

With reference to the first aspect and the foregoing implementations, in some implementations of the first aspect, the source device includes a light effect module, the first configuration information includes light effect information of the light effect module in the first display effect, and the light effect information includes one or more of display color information, color change frequency information, and mode information of the light effect module.

With reference to the first aspect and the foregoing implementations, in some implementations of the first aspect, the source device further includes a clock module, the first configuration information includes clock information of the source device in the first display effect, and the clock information is for display effect synchronization between the source device and the at least one receiving device.

With reference to the first aspect and the foregoing implementations, in some implementations of the first aspect, when the at least one receiving device includes two or more receiving devices, a connection is established between the two or more receiving devices by using any one of Bluetooth, wireless fidelity Wi-Fi, near field communication NFC, or a universal serial bus USB.

According to a second aspect, a system is provided, where the system includes a source device and at least one receiving device, the source device has a first display effect, and the at least one receiving device has a second display effect, where the source device is configured to perform the following steps: establishing a wireless charging connection to the at least one receiving device; determining first configuration information based on the first display effect; and sending the first configuration information to the at least one receiving device through the wireless charging connection; and the at least one receiving device is configured to perform the following step: synchronously modifying the second display effect to the first display effect based on the first configuration information.

With reference to the second aspect, in some implementations of the second aspect, the source device includes a first wireless charging module, the at least one receiving device includes a second wireless charging module, and the source device is specifically configured to perform the following steps: receiving, by using the first wireless charging module, a first pulse signal sent by the second wireless charging module of the at least one receiving device; and returning a second pulse signal to the at least one receiving device based on the first pulse signal, where the second pulse signal includes an identifier of the at least one receiving device; and the at least one receiving device is specifically configured to perform the following step: determining the at least one receiving device as a target device based on the identifier, and establishing a wireless connection to the target device.

With reference to the second aspect and the foregoing implementations, in some implementations of the second aspect, the source device is specifically configured to perform the following step: sending a third pulse signal to the at least one receiving device by using the first wireless charging module, where the third pulse signal includes the first configuration information.

With reference to the second aspect and the foregoing implementations, in some implementations of the second aspect, the second pulse signal and the third pulse signal have different communication packet formats and/or packet transmission intervals.

With reference to the second aspect and the foregoing implementations, in some implementations of the second aspect, the third pulse signal further includes power configuration information, and the at least one receiving device is specifically configured to perform the following step: determining charging power based on the power configuration information, and charging the source device based on the charging power.

With reference to the second aspect and the foregoing implementations, in some implementations of the second aspect, the source device includes a light effect module, the first configuration information includes light effect information of the light effect module in the first display effect, and the light effect information includes one or more of display color information, color change frequency information, and mode information of the light effect module.

With reference to the second aspect and the foregoing implementations, in some implementations of the second aspect, the source device further includes a clock module, the first configuration information includes clock information of the source device in the first display effect, and the clock information is for display effect synchronization between the source device and the at least one receiving device.

With reference to the second aspect and the foregoing implementations, in some implementations of the second aspect, when the at least one receiving device includes two or more receiving devices, a connection is established between the two or more receiving devices by using any one of Bluetooth, wireless fidelity Wi-Fi, near field communication NFC, or a universal serial bus USB.

According to another aspect, a computer storage medium is provided, including computer instructions. When the computer instructions are run on an electronic device, the electronic device is enabled to perform the method for linkage between devices according to any possible implementation of the first aspect.

### BRIEF DESCRIPTION OF DRAWINGS

FIG. 1 is a schematic diagram of a structure of a mobile phone and a PC;
FIG. 2 is a schematic diagram of a OneHop process between a mobile phone and a PC according to an embodiment of this application;
FIG. 3 is a schematic diagram of a scenario according to an embodiment of this application;
FIG. 4 is a schematic diagram of a structure of a mouse and a mouse pad according to an embodiment of this application;
FIG. 5 is a schematic diagram of a wireless charging communication process according to an embodiment of this application;
FIG. 6 is a schematic diagram of a method for linkage between devices according to an embodiment of this application; and
FIG. 7A and FIG. 7B are a schematic diagram of another method for linkage between devices according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In recent years, with the development of terminal products, requirements for interconnection and interworking between electronic devices in all scenarios gradually increase. Currently, interconnection and interworking between devices may be implemented by using technologies such as a Bluetooth (Bluetooth, BT), a near field communication (near field communication, NFC), and a wireless fidelity (wireless fidelity, Wi-Fi) network. For example, a Huawei share (Huawei share) OneHop technology has been widely applied to all electronic devices such as mobile phones, personal computers (personal computers, PCs), and smart speakers.

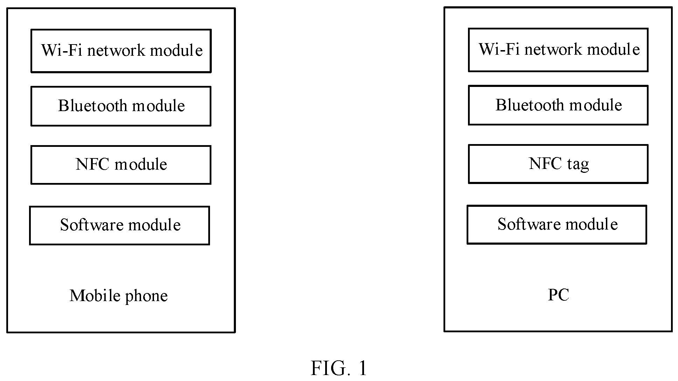

Specifically, using a process of OneHop between a mobile phone and a PC as an example, a Huawei share tag on the PC may be scanned by using the mobile phone. FIG. 1 is a schematic diagram of a structure of a mobile phone and a PC. In a OneHop process between the mobile phone and the PC, the mobile phone serves as a primary device (or referred to as an "NFC host"). As shown in FIG. 1, the mobile phone may include a wireless fidelity (wireless fidelity, Wi-Fi) network module, a Bluetooth (Bluetooth, BT) module, a near field communication (near field communication, NFC) module, and a software module. Correspondingly, as a scanned device, the PC may include a Wi-Fi network module, a Bluetooth module, a software module, and a Huawei share tag.

It should be understood that the Huawei share tag on the PC is actually a near field communication (near field communication, NFC) tag, and may be referred to as an "NFC Tag". A Bluetooth (Bluetooth, BT) address of the PC, that is, a Media Access Control (media access control, MAC) address, is burnt in the NFC tag. After the mobile phone obtains the MAC address of the PC, the BT module of the mobile phone establishes a link to the BT module of the PC based on the MAC address of the PC, to trigger interconnection and interworking between the BT module of the mobile phone and the BT module of the PC.

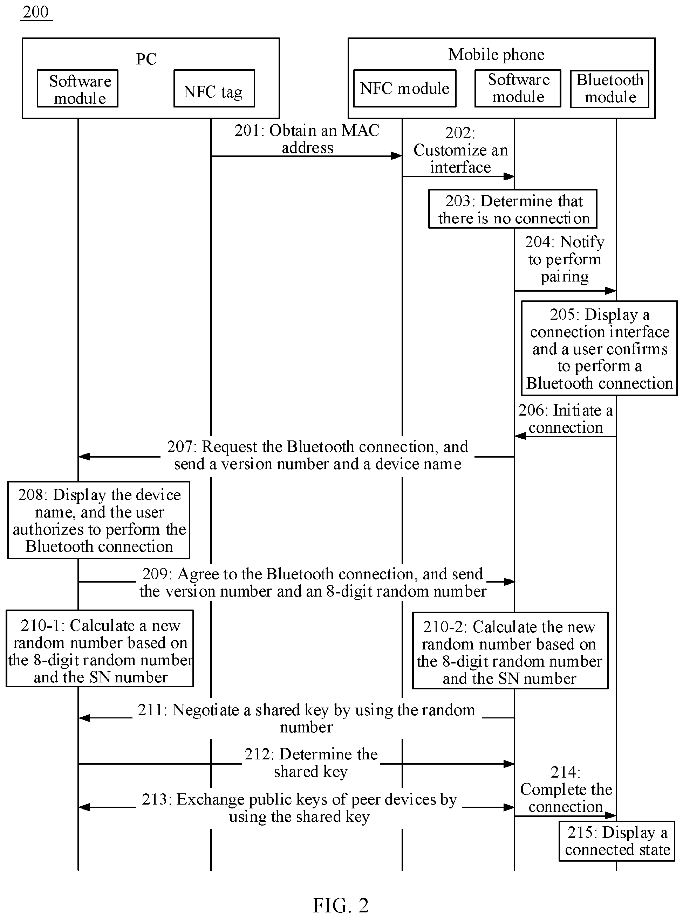

Specifically, FIG. 2 is a schematic diagram of a OneHop process between a mobile phone and a PC according to an embodiment of this application. The process may include the following steps.

201: A mobile phone scans an NFC Tag of a PC to obtain a MAC address of the PC. Specifically, the mobile phone may read the NFC Tag to obtain a radio frequency identification (radio frequency identification, RFID) identifier, and further obtain a Bluetooth address, a serial number (serial number, SN), and the like of the PC. This is not limited in this embodiment of this application.

202: The mobile phone customizes an interface based on the MAC address of the PC.

203: A software module determines whether the mobile phone establishes a connection to the PC. It should be understood that the software module may correspond to a functional module in a processor of the mobile phone. Details are not described herein again.

204: When the mobile phone does not establish a connection to the PC, the software module notifies a Bluetooth module to perform pairing.

205: The Bluetooth module of the mobile phone receives a pairing instruction, and triggers display of a connection interface on an interface of the mobile phone, so that a user confirms to perform a Bluetooth connection.

206: When the user confirms to perform the Bluetooth connection, the Bluetooth module initiates a Bluetooth connection request to the software module.

207: After receiving the Bluetooth connection request, the software module sends the Bluetooth connection request to the PC, where the Bluetooth connection request carries information such as a device name and a Bluetooth version number of the mobile phone.

208: After the PC receives the Bluetooth connection request sent by the mobile phone, the software module displays the device name of the mobile phone based on the Bluetooth connection request and the like, and provides an interface for the user to authorize to perform the Bluetooth connection.

209: The user authorizes the PC to perform the Bluetooth connection to the mobile phone, and the PC sends the Bluetooth version number, an 8-digit random number, and the like to the mobile phone.

210-1: The PC calculates a new random number based on the 8-digit random number and the SN number; and the mobile phone performs 210-2, and calculates the new random number based on the 8-digit random number and the SN number.

211: The mobile phone sends the new random number to the PC, and the PC and the mobile phone determine a shared key by using the new random number.

212: The PC sends the determined shared key to the mobile phone.

213: The mobile phone and the PC exchange public keys of peer devices by using the shared key.

214: The mobile phone establishes the Bluetooth connection to the PC.

215: The mobile phone and the PC display a connected state.

The foregoing process 200 describes an existing process of establishing a Bluetooth connection between a mobile phone and a PC by using OneHop. It should be understood that the connection establishment process may alternatively be based on Wi-Fi or the like. This is not limited in this embodiment of this application.

In the foregoing process, the NFC Tag on the PC device is an independent tag, and can be used only for information exchange with another device, and the NFC Tag requires that costs are additionally increased. In addition, in an actual operation process of OneHop between the mobile phone and the PC, NFC switches of the mobile phone and the PC need to be additionally turned on, and an operation is complex. In addition, a transmission frequency of the NFC is generally 13.56 MHz, and is usually used only for unidirectional transmission, and cannot meet transmission requirements in different scenarios.

An embodiment of this application provides a method for linkage between devices. The method can simplify an interaction process between devices.

The method for linkage between devices provided in this embodiment of this application may be applied to at least two electronic devices such as a mouse, a mouse pad, a mobile phone, a tablet computer, a wearable device, an in-vehicle device, an augmented reality (augmented reality, AR) / virtual reality (virtual reality, VR) device, a notebook computer, an ultra-mobile personal computer (ultra-mobile personal computer, UMPC), a netbook, and a personal digital assistant (personal digital assistant, PDA). The at least two electronic devices may exchange information through wireless transmission. A specific type of the electronic device is not limited in this embodiment of this application.

With reference to the accompanying drawings, the following describes in detail the method for linkage between devices provided in this embodiment of this application by using a process of linkage between a mouse 10 and a mouse pad 20 as an example.

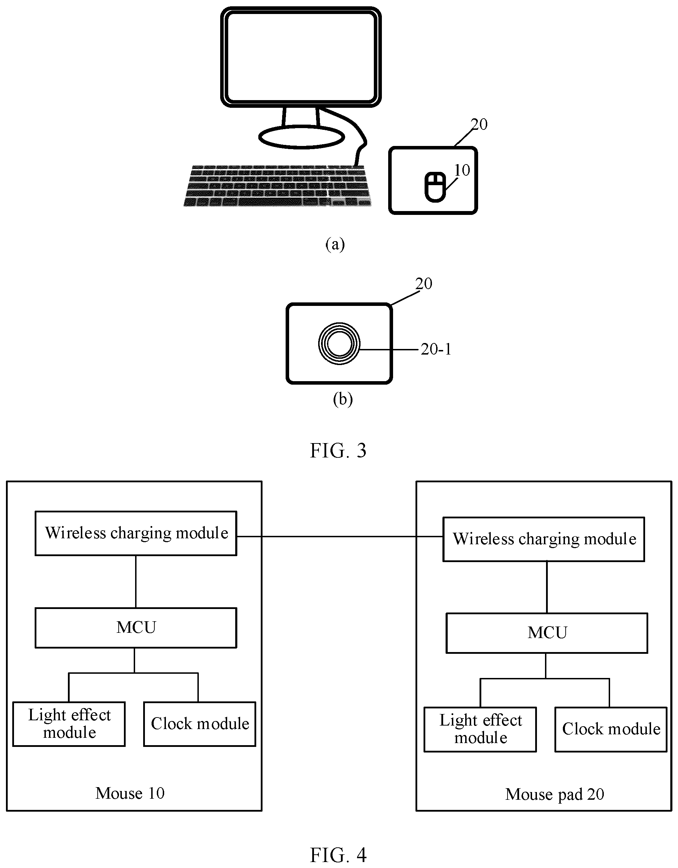

FIG. 3 is a schematic diagram of a scenario according to an embodiment of this application. As shown in figure (a) in FIG. 3, in this scenario, the mouse 10 and the mouse pad 20 may perform wireless charging based on a wireless charging protocol. As shown in figure (b) in FIG. 3, the mouse pad 20 has a wireless charging coil 20-1, and the mouse 10 may receive a charging voltage of the mouse pad 20 by using the wireless charging coil 20-1.

It should be understood that, in this embodiment of this application, the mouse 10 and the mouse pad 20 may have different display effects. The display effects may include light effects of the mouse 10 and the mouse pad 20, for example, steady-on, a flicker frequency, a multi-color cycle of colors, breathing of a light. This is not limited in this embodiment of this application.

Specifically, for a gaming mouse, for different use scenarios of a user, the mouse 10 and the mouse pad 20 may adapt to different scenarios and have different display effects. For example, when the user uses the mouse 10 for office work, the mouse 10 may be kept steady on and be displayed in an unchanged color. When the user uses the mouse 10 to play a game, a light effect of the mouse 10 may be cyclic blinking of a plurality of colors. Similarly, the mouse pad 20 may also adapt to different scenarios and have different display effects. In this way, in a use process of the user, if the mouse 10 and the mouse pad 20 have respective display effects, and the respective display effects are not uniform, visual experience of playing a game by the user is affected. Especially in a dark use scenario such as at night, a light effect change of the mouse 10 and the mouse pad 20 further affects user experience.

To improve user experience, the mouse 10 and the mouse pad 20 may have a uniform display effect, that is, user experience is improved through linkage between the mouse 10 and the mouse pad 20. It should be understood that the "linkage" described in this embodiment of this application may include presenting a uniform display effect between the mouse 10 and the mouse pad 20, or presenting a coordinated display effect between the mouse 10 and the mouse pad 20. This is not limited in this embodiment of this application.

FIG. 4 is a schematic diagram of a structure of a mouse and a mouse pad according to an embodiment of this application. As shown in FIG. 4, the mouse 10 and the mouse pad 20 may each include a wireless charging module, a microcontroller unit (microcontroller unit, MCU), a light effect module, a clock module, and the like.

It may be understood that the structure shown in this embodiment of this application does not constitute a specific limitation on the mouse 10 and the mouse pad 20. In some other embodiments of this application, the mouse 10 and the mouse pad 20 may include more or fewer components than those shown in the figure, or combine some components, or split some components, or have different component arrangements. The components in the figure may be implemented by hardware, software, or a combination of software and hardware. This is not limited in this embodiment of this application. The following describes the modules shown in FIG. 4 in detail.

### (1) Wireless charging module

The wireless charging module may charge the mouse 10 based on a wireless charging manner, for example, charge the mouse 10 by using the wireless charging coil 20-1 of the mouse pad 20.

A basic principle of wireless charging may be understood as follows: Energy is coupled by using a wireless charging coil by using an electromagnetic induction principle, so as to implement energy transfer, and coupling efficiency may be improved by using magnetic resonance. Specifically, the wireless charging coil may include a primary coil (also referred to as a "transmitting coil") at a transmit end and a secondary coil (also referred to as a "receiving coil") at a receive end. Energy is coupled by using two wireless charging coils, and a current output by the secondary coil is changed by a conversion circuit to a direct current to charge the mouse. For more wireless charging processes, refer to related implementation processes in the prior art. Details are not described in this embodiment of this application.

It should be understood that the wireless charging process may comply with a wireless charging communication protocol, and the wireless charging communication protocol may mainly resolve the following problems.

First, a wireless communication mechanism is used to determine whether a charged object is a metal product, or whether a receiving coil is placed in a process of charging. Specifically, the receiving coil may send an electrical signal to the transmitting coil at intervals, and a processor may determine, based on the electrical signal, whether the charged object is a metal product, whether the receiving coil is placed in the process of charging, or the like. If a metal product is placed on the receiving coil, an eddy current may be generated, causing the metal product to heat up. For example, if a key is placed on a transmitting board, the key will heat up. Therefore, charging behavior needs to be avoided when a metal product is placed on the receiving coil.

Second, the power of the transmitting coil is adjusted through the wireless communication mechanism. Specifically, in a process of charging a device, a current varies. For example, the charging current is 1 ampere (A) during normal charging, and the current decreases to dozens of milliamperes (mA) when the device is fully charged. In this process, if the power of the transmitting coil is always constant, when the device is fully charged, a voltage of the transmitting coil at the receive end is very high because the load decreases and the voltage increases. Therefore, in the process of charging, when the load changes, the power of the transmitting coil also needs to be continuously adjusted and changed, just like a switching power supply requiring voltage feedback control.

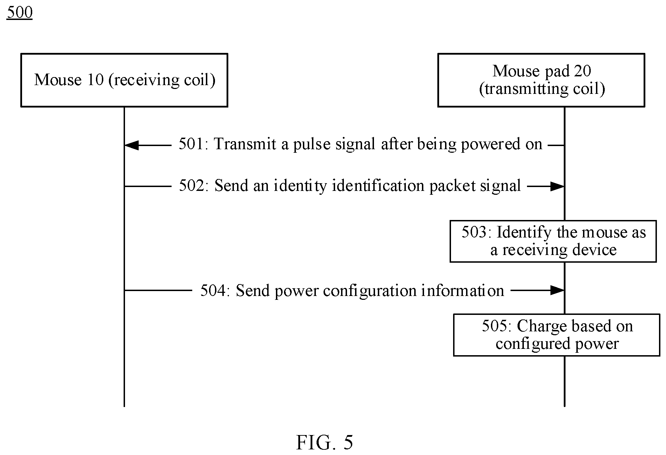

FIG. 5 is a schematic diagram of a wireless charging communication process according to an embodiment of this application. Specifically, using a mouse 10 and a mouse pad 20 as an example, a specific communication process of a wireless communication mechanism includes:
501: After being powered on, a mouse pad 20 transmits a pulse signal to a mouse 10 by using a transmitting coil.
502: After receiving the pulse signal, the mouse 10 sends a signal including an identity identification packet to the mouse pad 20.
503: The mouse pad 20 receives the signal including the identity identification packet, and identifies the mouse 10 as a receiving device based on the identity identification packet.
504: The mouse 10 sends power configuration information to the mouse pad 20 by using a receiving coil, where the power configuration information indicates charging power currently required by the mouse 10.
505: The mouse pad 20 adjusts the charging power based on the received power configuration information.

Through the foregoing process, it may be considered that a handshake connection has been established between the mouse 10 and the mouse pad 20, and details are not described subsequently.

It should be understood that, if the transmitting coil of the mouse pad 20 does not receive, within a specified time, the electrical signal sent by the mouse 10 by using the receiving coil, it is considered that the receiving coil of the mouse 10 is no longer above the transmitting coil of the mouse pad 20, and a handshake connection needs to be re-established to perform charging subsequently, that is, the wireless charging communication process described in FIG. 5 is repeated.

It should be further understood that in the wireless charging communication process described in FIG. 5, various different electrical signals may be implemented by using different communication packet formats. Specifically, different communication packets may correspond to different packet formats, that is, encoding formats, modulation schemes, and the like of data. For example, a packet format may include a preamble part, a packet header part, and the like. The preamble part may generally include 11 to 25 1s. The packet header part may usually include 0X01, 0X51, 0X71, 0X03, 0X04, and the like. 0X01, 0X71, and 0X51 may indicate a packet transmission sequence, and an inter-packet interval is less than 21 milliseconds. The 0X03 and 0X04 packets may be sent in the process of charging, and a packet transmission interval may be less than 1.5 seconds or 23 seconds. A communication packet format and a packet transmission process of an electrical signal are not limited in this embodiment of this application.

### (2) Microcontroller unit (microcontroller unit, MCU)

The MCU may include one or more processing units. Different processing units may be independent components, or may be integrated into one or more processors. The MCU may be a command center in a process of charging the mouse 10 or the mouse pad 20, and may generate an operation control signal based on an instruction operation code and a time sequence signal of a communication packet, and control the wireless charging module to further complete the wireless charging process.

Optionally, the MCU may be provided with a memory, configured to store instructions, data, and the like. For example, the MCU of the mouse pad 20 may store a mouse electrical signal.

### (3) Light effect module

The light effect module may include one or more types of lights, and the light effect module may also be referred to as a "red green blue (red green blue, RGB) light group module". The RGB light group module may include a plurality of indicators of different colors. The RGB light group module may receive light effect information (or referred to as a "light effect instruction") sent by the MCU, adjust display of the RGB light group module based on the light effect information, and finally present effects such as different colors and different blinking manners to the user.

Optionally, in this embodiment of this application, the light effect information may include color information, frequency information, mode information, and the like of the RGB light group module. For example, Table 1 lists information content included in possible light effect information provided in this embodiment of this application. As shown in Table 1, the light effect information may indicate the RGB light group module to adjust color information of a light and color change frequency information, or adjust information about a mode of the light, such as a steady-on mode, a steady-off mode, a rainbow mode, a multi-color cycle mode, a blinking mode, or a trigger mode. It should be understood that, with development of technologies, the light effect information may further include more configuration information. The information content included in the light effect information is not limited in this embodiment of this application.

**Table 1**

| | | |
|---|---|---|
| | Information content | Specific example |
| Light effect information | Color information | The red, green, and blue channels have 256-order luminance for each color, and the luminance changes range from order 0 to order 256 |
| | Frequency information | Frequency of color change of each light |
| | Mode information | Steady-on mode, steady-off mode, rainbow mode, cycle mode, blinking mode, and trigger mode |

### (4) Clock module

The clock module is configured to implement time synchronization of display effects of the mouse 10 and the mouse pad 20. In other words, coordination between clock information of the clock module and the light effect information of the light effect module may implement linkage of any light effect.

Specifically, in this embodiment of this application, configuration information that determines display effects of the mouse 10 and the mouse pad 20 may be referred to as "first configuration information". It should be understood that the first configuration information may include the light effect information and the clock information, that is, configuration parameters such as a color, a blinking mode, and a cycle mode of RGB light effect modules of the mouse 10 and the mouse pad 20 at each time point may be determined based on the first configuration information.

It should be further understood that the clock module described above may correspond to a specific hardware module, or may be implemented in a form of a software unit. This is not limited in this embodiment of this application.

In some embodiments, only the wireless charging module, the MCU, the light effect module, and the clock module that are related to embodiments of this application are described above. In a specific implementation process, the mouse 10 and the mouse pad 20 may further include modules or components that are not shown in FIG. 4. For example, the mouse 10 in FIG. 4 may further include one or more interfaces, and the wireless charging module, the MCU, the light effect module, and the clock module may be connected by using the one or more interfaces. Alternatively, the mouse 10 may further include one or more different types of sensors. This is not limited in this embodiment of this application.

For ease of understanding, in the following embodiment of this application, for the mouse 10 and the mouse pad 20 that can be wirelessly charged and that are shown in FIG. 3, an example in which the mouse 10 and the mouse pad 20 have the structure shown in FIG. 4 is used to describe in detail a method for linkage between devices provided in embodiments of this application with reference to the accompanying drawings and application scenarios.

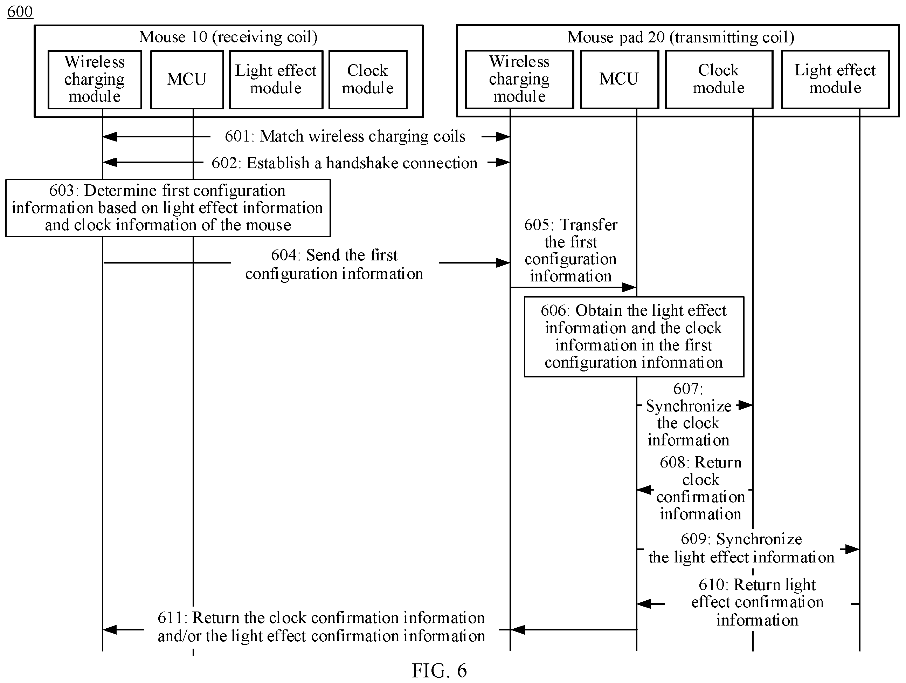

FIG. 6 is a schematic diagram of a method for linkage between devices according to an embodiment of this application. As shown in FIG. 6, the method includes the following steps.

601: A wireless charging coil of a mouse 10 and a wireless charging coil of a mouse pad 20 are matched.

602: The wireless charging coil of the mouse 10 establishes a handshake connection to the wireless charging coil of the mouse pad 20.

It should be understood that, for a process of steps 601 to 602, refer to related descriptions of the wireless charging communication process described in FIG. 5. That is, the mouse 10 and the mouse pad 20 establish the handshake connection by using an electrical signal between coils. "Establishing a handshake connection" may be understood as: The mouse pad 20 may determine that the mouse 10 is a receiving device, and charge the mouse 10 based on power configuration information sent by the mouse 10. Details are not described herein again.

603: An MCU obtains light effect information, clock information, and the like of the mouse 10, and determines first configuration information based on the light effect information and the clock information of the mouse 10.

Optionally, the first configuration information may include the light effect information and the clock information of the mouse 10, that is, configuration parameters such as a color, a blinking mode, and a cycle mode of an RGB light group module of the mouse 10 at each time point may be determined based on the first configuration information.

For example, for different use scenarios of the user, for example, a scenario of playing a game and a scenario of watching a video, the mouse 10 and the mouse pad 20 may correspondingly have different light effects. In other words, for different use scenarios, the mouse 10 may determine different first configuration information based on a current light effect.

In a possible implementation, when the mouse 10 and the mouse pad 20 are delivered from a factory, the MCU is embedded with the debugged light effect information. Specifically, referring to the light effect information listed in Table 1, for example, configuration parameters such as a color, a blinking mode, and a cycle mode of an RGB light group module are built in the MCUs of the mouse 10 and the mouse pad 20. In addition, clock information is also built in the MCUs of the mouse 10 and the mouse pad 20, and the clock information may match the light effect information, so as to implement linkage of any light effect between the mouse 10 and the mouse pad 20.

604: The mouse 10 sends the first configuration information to a wireless charging module of the mouse pad 20 by using a wireless charging module.

Specifically, the mouse 10 determines the first configuration information based on the light effect information and the clock information in the current scenario, and transfers the first configuration information to the mouse pad 20.

In a possible implementation, the first configuration information may be sent by using a pulse signal of a wireless charging module between the mouse 10 and the mouse pad 20. For example, the first configuration information is carried in the power configuration information transmitted by a charging coil of the mouse 10 to a charging coil of the mouse pad 20.

In yet another possible implementation, the first configuration information may be sent to the charging coil of the mouse pad 20 by using the charging coil of the mouse 10 in a form of a newly added pulse signal. A manner of sending the first configuration information is not limited in this embodiment of this application.

605: The wireless charging module of the mouse pad 20 transfers the first configuration information to the MCU.

606: The MCU of the mouse pad 20 obtains the light effect information and the clock information in the first configuration information.

607: The MCU of the mouse pad 20 sends the clock information to a clock module, that is, synchronization of the clock information is implemented.

608: The clock module of the mouse pad 20 returns clock confirmation information to the MCU. The clock confirmation information indicates that an internal clock of the mouse pad 20 is synchronized with the clock information of the mouse 10.

609: The MCU of the mouse pad 20 sends the light effect information to a light effect module, that is, synchronization of the light effect information is implemented.

610: The light effect module of the mouse pad 20 returns light effect confirmation information to the MCU. The light effect confirmation information indicates that the light effect information of the mouse pad 20 is synchronized with the light effect information of the mouse 10.

611: The MCU of the mouse pad 20 returns, based on the clock confirmation information returned by the clock module and the light effect confirmation information returned by the light effect module, the clock confirmation information and/or the light effect confirmation information to the mouse 10 by using the wireless charging module.

It should be understood that, the foregoing described process of linkage between devices is based on the wireless charging communication process, and may implement instruction interaction between a mouse and a mouse pad. Configuration information such as the light effect information and the clock information of the mouse is carried in a pulse signal exchanged between the mouse and the mouse pad, so that an MCU of the mouse pad adjusts its own originally set light effect mode of the mouse pad based on the configuration information such as the light effect information and the clock information, and implements clock alignment with the mouse, thereby achieving an effect of light effect linkage between the mouse pad and the mouse. In this way, the mouse and the mouse pad can form overall light effect surrounding, thereby improving user experience.

The scenario shown in FIG. 3 is used as an example. The scenario includes a mouse and a mouse pad that can be wirelessly connected. It should be understood that the method for linkage between devices provided in embodiments of this application may be further used between a plurality of devices. A quantity and a type of devices are not limited in embodiments of this application.

It should be further understood that, when the method for linkage between devices provided in embodiments of this application is used for a plurality of devices, a connection manner between the plurality of devices is not limited to a wireless connection or a wired connection. The wireless connection may include establishing a Wi-Fi connection, a Bluetooth connection, an NFC connection, performing communication by using a future communication technology to exchange an instruction, or the like. The wired connection may include a universal serial bus (universal serial bus, USB) connection or the like. This embodiment of this application does not limit the connection manner between the plurality of devices.

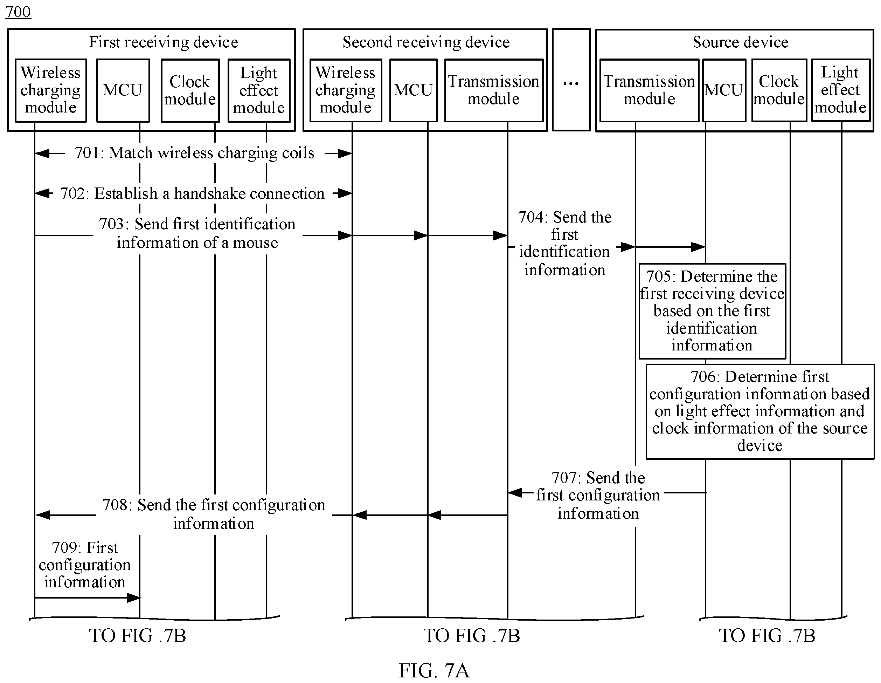

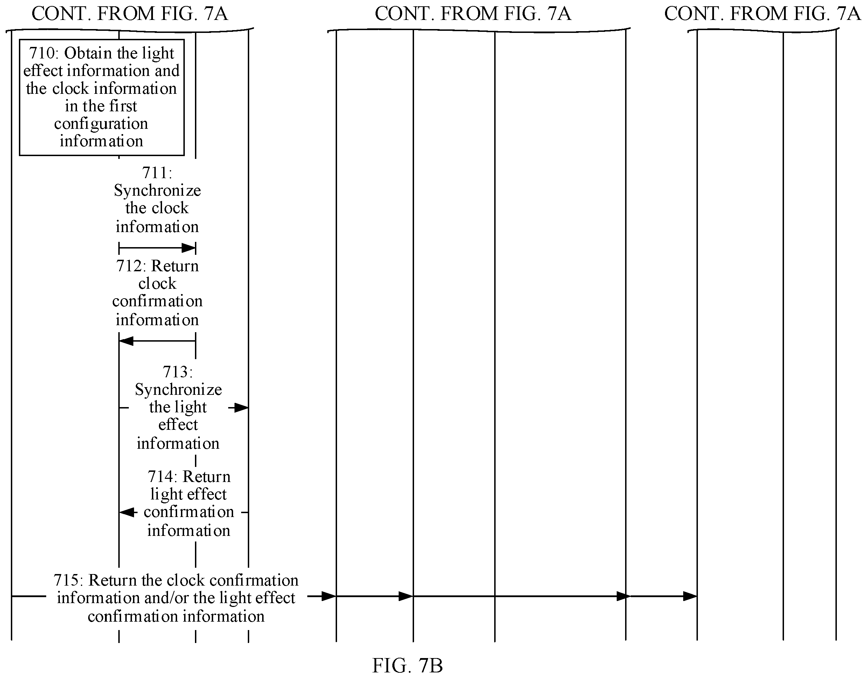

FIG. 7A and FIG. 7B are a schematic diagram of another method for linkage between devices according to an embodiment of this application. As shown in FIG. 7A and FIG. 7B, a process of linkage between three devices is used as an example. The method is applied to a system including a first receiving device, a second receiving device, and a source device. The first receiving device and the second receiving device may follow an indication of the source device, to implement a display effect of light effect linkage.

For example, the first receiving device and the second receiving device may correspond to the mouse 10 and the mouse pad 20 described above. In other words, the first receiving device may exchange an instruction with the second receiving device by using a charging coil. The source device may be a personal computer (personal computer, PC) or the like. The source device and the second receiving device may be connected by using a USB data cable, or may establish a Wi-Fi connection, a Bluetooth connection, an NFC connection, a pogo pin connector connection, or the like. This is not limited in this embodiment of this application.

It should be understood that, in this embodiment, for structures of the first receiving device and the second receiving device, refer to the composition modules or units of the mouse 10 and the mouse pad 20 described in FIG. 4. Details are not described herein again. The source device may have more or fewer composition modules or units than the mouse 10 and the mouse pad 20. This is not limited in this embodiment of this application. For example, when the source device is a PC, the PC may also include an MCU, a transmission module, a clock module, a light effect module, and the like. The MCU may be understood as a processor of the PC, and the transmission module may include a Bluetooth transmission module, a Wi-Fi transmission module, and the like. Details are not described herein again.

Specifically, a method 700 includes the following content.

701: A wireless charging coil of a first receiving device and a wireless charging coil of a second receiving device are matched.

702: The wireless charging coil of the first receiving device establishes a handshake connection to the wireless charging coil of the second receiving device.

It should be understood that, the process of steps 701 to 702 may refer to the process of steps 601 to 602, and details are not described herein again.

703: The first receiving device sends first identification information to a wireless charging module of the second receiving device by using a wireless charging module, where the first identification information identifies device information of the first receiving device.

Optionally, the first identification information includes a vendor identification (vendor identification, VID) and/or a product identification (product identification, PID) of the first receiving device. It should be understood that all devices have unique VIDs and PIDs, and the source device may distinguish between different devices by using different VIDs and PIDs. Optionally, both the VID and the PID are two bytes long, and implementation forms of the VID and the PID are not limited in this embodiment of this application.

704: After the wireless charging module of the second receiving device receives the first identification information sent by the first receiving device, the first identification information is sent to the source device by using the transmission module.

Optionally, the second receiving device may be connected to the source device by using a USB data cable, or by establishing a Wi-Fi connection, a Bluetooth connection, an NFC connection, or the like. In this case, the transmission module of the second receiving device and the transmission module of the source device may transmit information or an instruction based on the established connection. Details are not described herein again.

705: An MCU of the source device determines the first receiving device based on the first identification information.

706: The MCU of the source device determines first configuration information based on light effect information and clock information of the source device.

707: The source device transfers the first configuration information to the second receiving device by using the transmission module.

708: After the first configuration information is received, the second receiving device sends the first configuration information to the first receiving device by using the wireless charging module.

It should be understood that after the second receiving device receives the first configuration information, an MCU of the second receiving device may obtain the light effect information and the clock information in the first configuration information. In addition, the MCU of the second receiving device may synchronize a light effect of the MCU based on the light effect information, and synchronize a clock of the MCU based on the clock information, that is, implement synchronization between the light effect information and the clock information. In other words, the second receiving device may implement synchronization between a light effect and a clock with the source device.

709: After the wireless charging module of the first receiving device receives the first configuration information, the first configuration information is sent to an MCU.

710: The MCU of the first receiving device obtains the light effect information and the clock information in the first configuration information.

711: The MCU of the first receiving device sends the clock information to a clock module, that is, implements synchronization of the clock information.

712: The clock module of the first receiving device returns clock confirmation information to the MCU. The clock confirmation information indicates that the internal clock of the first receiving device is synchronized with the clock information of the source device.

713: The MCU of the first receiving device sends the light effect information to a light effect module, that is, implements synchronization of the light effect information.

714: The light effect module of the first receiving device returns light effect confirmation information to the MCU. The light effect confirmation information indicates that the light effect information of the first receiving device is synchronized with the light effect information of the source device.

715: The MCU of the first receiving device returns the clock confirmation information and/or the light effect confirmation information to the source device by using the wireless charging module through the second receiving device.

In a possible implementation, the MCU of the first receiving device may return, based on at least one of the clock confirmation information and the light effect confirmation information, the clock confirmation information, or only the light effect confirmation information, or information including both the clock confirmation information and the light effect confirmation information to the source device through the second receiving device. This is not limited in this embodiment of this application.

In another possible implementation, the MCU of the first receiving device may return the clock confirmation information and/or the light effect confirmation information to the second receiving device by using the wireless charging module, and then the second receiving device sends the clock confirmation information and/or the light effect confirmation information to the source device by using a transmission module that establishes a connection to the source device. This process is not described again in this embodiment of this application.

The foregoing uses three devices as an example to describe a method for linkage between a plurality of devices. Optionally, this embodiment of this application may be further used for linkage between light effects, clocks, and the like of more devices. For example, in FIG. 7A and FIG. 7B, more other devices may be further included between the second receiving device and the source device. All the devices may be connected in any one of the foregoing manners, to transmit an instruction including configuration information. A quantity and a type of electronic devices are not limited in this embodiment of this application.

Through the foregoing method, for an accessory device such as a mouse or a mouse pad, or for another electronic device such as a PC, in this embodiment of this application, configuration information such as light effect information and clock information of a host may be transferred to another device, so as to implement light effect linkage between a plurality of devices. In addition, the transfer process may be based on technologies such as a wireless charging technology and a OneHop technology, and an operation is simple and fast, thereby improving timeliness of linkage between devices and improving user experience.

For example, when a user plays a game by using a gaming laptop, light effects of a mouse and a mouse pad may be linked with a light effect of the gaming laptop, thereby bringing immersive game experience to the user.

It should be understood that linkage between devices in this embodiment of this application includes but is not limited to light effect synchronization, clock synchronization, and the like, and may further include linkage between more components, for example, sound effect synchronization between a plurality of gaming laptops. This is not limited in this embodiment of this application.

It may be understood that, to implement the foregoing functions, the electronic device includes corresponding hardware and/or software modules for performing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into function modules based on the foregoing method examples. For example, each function module corresponding to each function may be obtained through division, or two or more functions may be integrated into one processing module. The integrated module may be implemented in a form of hardware. It should be noted that, in embodiments, division into the modules is an example, and is merely logical function division. During actual implementation, another division manner may be used.

It should be noted that all related content of the steps in the foregoing method embodiments may be cited in function description of corresponding functional modules. Details are not described herein again.

The electronic device provided in this embodiment is configured to execute the foregoing method for linkage between devices, and therefore an effect same as that of the foregoing implementation methods can be achieved.

When an integrated unit is used, the electronic device may include a processing module, a storage module, and a communication module. The processing module may be configured to control and manage an action of the electronic device, and the storage module may be configured to support the electronic device in executing stored program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 4.

This embodiment further provides a computer-readable storage medium. The computer-readable storage medium stores computer instructions, and when the computer instructions run on an electronic device, the electronic device is enabled to perform the related method steps, to implement the method for linkage between devices in the foregoing embodiment.

This embodiment further provides a computer program product. When the computer program product runs on a computer, the computer is enabled to perform the foregoing related steps, to implement the method for linkage between devices in the foregoing embodiment.

In addition, an embodiment of this application further provides an apparatus. The apparatus may be specifically a chip, a component, or a module. The apparatus may include a processor and a memory that are connected to each other. The memory is configured to store computer executable instructions. When the apparatus runs, the processor may execute the computer executable instructions stored in the memory, to enable the chip to perform the method for linkage between devices in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or **communication** connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A method for linkage between devices, wherein the method is applied to a system comprising a source device (10) and at least one receiving device (20),
the source device has a first display effect, the at least one receiving device has a second display effect, and the method comprises:
establishing (602), by the source device, a wireless charging connection to the at least one receiving device;
determining (603), by the source device, first configuration information based on the first display effect;
sending (604), by the source device, the first configuration information to the at least one receiving device through the wireless charging connection; and
synchronously modifying (607, 609), by the at least one receiving device, the second display effect to the first display effect based on the first configuration information.

2. The method according to claim 1, wherein the source device comprises a first wireless charging module, the at least one receiving device comprises a second wireless charging module, and the establishing, by the source device, a wireless charging connection to the at least one receiving device comprises:
receiving, by the first wireless charging module of the source device, a first pulse signal sent by the second wireless charging module of the at least one receiving device;
returning, by the source device, a second pulse signal to the at least one receiving device based on the first pulse signal, wherein the second pulse signal comprises an identifier of the at least one receiving device; and
determining, by the at least one receiving device, the at least one receiving device as a target device based on the identifier, and establishing a wireless connection to the target device.

3. The method according to claim 2, wherein the sending, by the source device, the first configuration information to the at least one receiving device comprises:
sending, by the source device, a third pulse signal to the at least one receiving device by using the first wireless charging module, wherein the third pulse signal comprises the first configuration information.

4. The method according to claim 3, wherein the second pulse signal and the third pulse signal have different communication packet formats and/or packet transmission intervals.

5. The method according to claim 3 or 4, wherein the third pulse signal further comprises power configuration information, and the method further comprises:
determining, by the at least one receiving device, charging power based on the power configuration information, and charging the source device based on the charging power.

6. The method according to any one of claims 1 to 5, wherein the source device comprises a light effect module, the first configuration information comprises light effect information of the light effect module in the first display effect, and the light effect information comprises one or more of display color information, color change frequency information, and mode information of the light effect module.

7. The method according to any one of claims 1 to 6, wherein the source device further comprises a clock module, the first configuration information comprises clock information of the source device in the first display effect, and the clock information is for display effect synchronization between the source device and the at least one receiving device.

8. The method according to any one of claims 1 to 7, wherein when the at least one receiving device comprises two or more receiving devices, a connection is established between the two or more receiving devices by using any one of Bluetooth, wireless fidelity, Wi-Fi, near field communication NFC, or a universal serial bus USB.

9. A system, wherein the system comprises a source device (10) and at least one receiving device (20), the source device has a first display effect, and the at least one receiving device has a second display effect, wherein the source device is configured to perform the following steps:
establishing (602) a wireless charging connection to the at least one receiving device;
determining (603) first configuration information based on the first display effect; and
sending (604) the first configuration information to the at least one receiving device through the wireless charging connection; and
the at least one receiving device is configured to perform the following step:
synchronously (607, 609) modifying the second display effect to the first display effect based on the first configuration information.

10. The system according to claim 9, wherein the source device comprises a first wireless charging module, the at least one receiving device comprises a second wireless charging module, and the source device is specifically configured to perform the following steps:
receiving, by using the first wireless charging module, a first pulse signal sent by the second wireless charging module of the at least one receiving device; and
returning a second pulse signal to the at least one receiving device based on the first pulse signal, wherein the second pulse signal comprises an identifier of the at least one receiving device; and
the at least one receiving device is specifically configured to perform the following step:
determining the at least one receiving device as a target device based on the identifier, and establishing a wireless connection to the target device.

11. The system according to claim 10, wherein the source device is specifically configured to perform the following step:
sending a third pulse signal to the at least one receiving device by using the first wireless charging module, wherein the third pulse signal comprises the first configuration information.

12. The system according to claim 11, wherein the second pulse signal and the third pulse signal have different communication packet formats and/or packet transmission intervals.

13. The system according to claim 11 or 12, wherein the third pulse signal further comprises power configuration information, and the at least one receiving device is specifically configured to perform the following step:
determining charging power based on the power configuration information, and charging the source device based on the charging power.

14. The system according to any one of claims 9 to 13, wherein the source device comprises a light effect module, the first configuration information comprises light effect information of the light effect module in the first display effect, and the light effect information comprises one or more of display color information, color change frequency information, and mode information of the light effect module.

15. A computer-readable storage medium, wherein the computer-readable storage medium stores computer instructions, and when the computer instructions are run on an electronic device, the electronic device is enabled to perform the method according to any one of claims 1 to 8.

## Patentansprüche

1. Verfahren zur Verbindung zwischen Vorrichtungen, wobei das Verfahren auf ein System angewendet wird, das eine Quellvorrichtung (10) und mindestens eine Empfangsvorrichtung (20) umfasst,
die Quellvorrichtung einen ersten Anzeigeeffekt aufweist, die mindestens eine Empfangsvorrichtung einen zweiten Anzeigeeffekt aufweist und das Verfahren Folgendes umfasst:
Herstellen (602), durch die Quellvorrichtung, einer drahtlosen Ladeverbindung zu der mindestens einem Empfangsvorrichtung;
Bestimmen (603), durch die Quellvorrichtung, erster Konfigurationsinformationen basierend auf dem ersten Anzeigeeffekt;
Senden (604), durch die Quellvorrichtung, der ersten Konfigurationsinformationen an die mindestens eine Empfangsvorrichtung über die drahtlose Ladeverbindung; und
synchrones Verändern (607, 609), durch die mindestens eine Empfangsvorrichtung, des zweiten Anzeigeeffekts zu dem ersten Anzeigeeffekt basierend auf den ersten Konfigurationsinformationen.

2. Verfahren nach Anspruch 1, wobei die Quellvorrichtung ein erstes drahtloses Lademodul umfasst, die mindestens eine Empfangsvorrichtung ein zweites drahtloses Lademodul umfasst und das Herstellen, durch die Quellvorrichtung, einer drahtlosen Ladeverbindung zu der mindestens einen Empfangsvorrichtung Folgendes umfasst:
Empfangen, durch das erste drahtlose Lademodul der Quellvorrichtung, eines ersten Impulssignals, das durch das zweite drahtlose Lademodul der mindestens einen Empfangsvorrichtung gesendet wird;
Zurückschicken, durch die Quellvorrichtung, eines zweiten Impulssignals an die mindestens eine Empfangsvorrichtung basierend auf dem ersten Impulssignal, wobei das zweite Impulssignal eine Kennung der mindestens einen Empfangsvorrichtung umfasst; und
Bestimmen, durch die mindestens eine Empfangsvorrichtung, der mindestens einen Empfangsvorrichtung als eine Zielvorrichtung basierend auf der Kennung und Herstellen einer drahtlosen Verbindung zu der Zielvorrichtung.

3. Verfahren nach Anspruch 2, wobei das Senden, durch die Quellvorrichtung, der ersten Konfigurationsinformationen an die mindestens eine Empfangsvorrichtung Folgendes umfasst:
Senden, durch die Quellvorrichtung, eines dritten Impulssignals an die mindestens eine Empfangsvorrichtung unter Verwendung des ersten drahtlosen Lademoduls, wobei das dritte Impulssignal die ersten Konfigurationsinformationen umfasst.

4. Verfahren nach Anspruch 3, wobei das zweite Impulssignal und das dritte Impulssignal unterschiedliche Kommunikationspaketformate und/oder Paketübertragungsintervalle aufweisen.

5. Verfahren nach Anspruch 3 oder 4, wobei das dritte Impulssignal ferner Leistungskonfigurationsinformationen umfasst und das Verfahren ferner Folgendes umfasst:
Bestimmen, durch die mindestens eine Empfangsvorrichtung, einer Ladeleistung basierend auf den Leistungskonfigurationsinformationen und Laden der Quellvorrichtung basierend auf der Ladeleistung.

6. Verfahren nach einem der Ansprüche 1 bis 5, wobei die Quellvorrichtung ein Lichteffektmodul umfasst, die ersten Konfigurationsinformationen Lichteffektinformationen des Lichteffektmoduls in dem ersten Anzeigeeffekt umfassen und die Lichteffektinformationen eine oder mehrere aus Anzeigefarbinformationen, Farbwechselfrequenzinformationen und Modusinformationen des Lichteffektmoduls umfassen.

7. Verfahren nach einem der Ansprüche 1 bis 6, wobei die Quellvorrichtung ferner ein Taktmodul umfasst, die ersten Konfigurationsinformationen Taktinformationen der Quellvorrichtung in dem ersten Anzeigeeffekt umfassen und die Taktinformationen einer Anzeigeeffektsynchronisierung zwischen der Quellvorrichtung und der mindestens einen Empfangsvorrichtung dienen.

8. Verfahren nach einem der Ansprüche 1 bis 7, wobei, wenn die mindestens eine Empfangsvorrichtung zwei oder mehrere Empfangsvorrichtungen umfasst, eine Verbindung zwischen den zwei oder mehreren Empfangsvorrichtungen unter Verwendung eines aus Bluetooth, Wireless Fidelity, Wi-Fi, Near Field Communication, NFC, oder einem universellen seriellen Bus, USB, hergestellt wird.

9. System, wobei das System eine Quellvorrichtung (10) und mindestens eine Empfangsvorrichtung (20) umfasst, die Quellvorrichtung einen ersten Anzeigeeffekt aufweist und die mindestens eine Empfangsvorrichtung einen zweiten Anzeigeeffekt aufweist, wobei die Quellvorrichtung dazu konfiguriert ist, die folgenden Schritte durchzuführen:
Herstellen (602) einer drahtlosen Ladeverbindung zu der mindestens einem Empfangsvorrichtung;
Bestimmen (603) erster Konfigurationsinformationen basierend auf dem ersten Anzeigeeffekt; und
Senden (604) der ersten Konfigurationsinformationen an die mindestens eine Empfangsvorrichtung über die drahtlose Ladeverbindung; und
die mindestens eine Empfangsvorrichtung dazu konfiguriert ist, den folgenden Schritt durchzuführen:
synchrones (607, 609) Verändern des zweiten Anzeigeeffekts zu dem ersten Anzeigeeffekt basierend auf den ersten Konfigurationsinformationen.

10. System nach Anspruch 9, wobei die Quellvorrichtung ein erstes drahtloses Lademodul umfasst, die mindestens eine Empfangsvorrichtung ein zweites drahtloses Lademodul umfasst und die Quellvorrichtung insbesondere dazu konfiguriert ist, die folgenden Schritte durchzuführen:
Empfangen, unter Verwendung des ersten drahtlosen Lademoduls, eines ersten Impulssignals, das durch das zweite drahtlose Lademodul der mindestens einen Empfangsvorrichtung gesendet wird; und
Zurückschicken eines zweiten Impulssignals an die mindestens eine Empfangsvorrichtung basierend auf dem ersten Impulssignal, wobei das zweite Impulssignal eine Kennung der mindestens einen Empfangsvorrichtung umfasst; und
die mindestens eine Empfangsvorrichtung insbesondere dazu konfiguriert ist, den folgenden Schritt auszuführen:
Bestimmen der mindestens einen Empfangsvorrichtung als eine Zielvorrichtung basierend auf der Kennung und Herstellen einer drahtlosen Verbindung zu der Zielvorrichtung.

11. System nach Anspruch 10, wobei die Quellvorrichtung insbesondere dazu konfiguriert ist, den folgenden Schritt durchzuführen:
Senden eines dritten Impulssignals an die mindestens eine Empfangsvorrichtung unter Verwendung des ersten drahtlosen Lademoduls, wobei das dritte Impulssignal die ersten Konfigurationsinformationen umfasst.

12. System nach Anspruch 11, wobei das zweite Impulssignal und das dritte Impulssignal unterschiedliche Kommunikationspaketformate und/oder Paketübertragungsintervalle aufweisen.

13. System nach Anspruch 11 oder 12, wobei das dritte Impulssignal ferner Leistungskonfigurationsinformationen umfasst und die mindestens eine Empfangsvorrichtung insbesondere dazu konfiguriert ist, den folgenden Schritt durchzuführen:
Bestimmen der Ladeleistung basierend auf den Leistungskonfigurationsinformationen und Laden der Quellvorrichtung basierend auf der Ladeleistung.

14. System nach einem der Ansprüche 9 bis 13, wobei die Quellvorrichtung ein Lichteffektmodul umfasst, die ersten Konfigurationsinformationen Lichteffektinformationen des Lichteffektmoduls in dem ersten Anzeigeeffekt umfassen und die Lichteffektinformationen eine oder mehrere aus Anzeigefarbinformationen, Farbwechselfrequenzinformationen und Modusinformationen des Lichteffektmoduls umfassen.

15. Computerlesbares Speichermedium, wobei das computerlesbare Speichermedium Computeranweisungen speichert und, wenn die Computeranweisungen auf einer elektronischen Vorrichtung ausgeführt werden, die elektronische Vorrichtung in die Lage versetzt wird, das Verfahren nach einem der Ansprüche 1 bis 8 durchzuführen.

## Revendications

1. Procédé de liaison entre dispositifs, dans lequel le procédé est appliqué à un système comprenant un dispositif source (10) et au moins un dispositif récepteur (20),
le dispositif source a un premier effet d'affichage, l'au moins un dispositif récepteur a un second effet d'affichage, et le procédé comprend :
l'établissement (602), par le dispositif source, d'une connexion de charge sans fil à l'au moins un dispositif récepteur ;
la détermination (603), par le dispositif source, de premières informations de configuration sur la base du premier effet d'affichage ;
l'envoi (604), par le dispositif source, des premières informations de configuration à l'au moins un dispositif récepteur à travers la connexion de charge sans fil ; et
la modification synchrone (607, 609), par l'au moins un dispositif récepteur, du second effet d'affichage au premier effet d'affichage sur la base des premières informations de configuration.

2. Procédé selon la revendication 1, dans lequel le dispositif source comprend un premier module de charge sans fil, l'au moins un dispositif récepteur comprend un second module de charge sans fil, et l'établissement, par le dispositif source, d'une connexion de charge sans fil à l'au moins un dispositif récepteur comprend :
la réception, par le premier module de charge sans fil du dispositif source, d'un premier signal d'impulsion envoyé par le second module de charge sans fil de l'au moins un dispositif récepteur ;
le renvoi, par le dispositif source, d'un deuxième signal d'impulsion à l'au moins un dispositif récepteur sur la base du premier signal d'impulsion, dans lequel le deuxième signal d'impulsion comprend un identifiant de l'au moins un dispositif récepteur ; et
la détermination, par l'au moins un dispositif récepteur, de l'au moins un dispositif récepteur en tant que dispositif cible sur la base de l'identifiant, et l'établissement d'une connexion sans fil au dispositif cible.

3. Procédé selon la revendication 2, dans lequel l'envoi, par le dispositif source, des premières informations de configuration à l'au moins un dispositif récepteur comprend : l'envoi, par le dispositif source, d'un troisième signal d'impulsion à l'au moins un dispositif récepteur à l'aide du premier module de charge sans fil, dans lequel le troisième signal d'impulsion comprend les premières informations de configuration.

4. Procédé selon la revendication 3, dans lequel le deuxième signal d'impulsion et le troisième signal d'impulsion ont des formats de paquets de communication et/ou des intervalles de transmission de paquets différents.

5. Procédé selon la revendication 3 ou 4, dans lequel le troisième signal d'impulsion comprend également des informations de configuration de puissance, et le procédé comprend également :
la détermination, par l'au moins un dispositif récepteur, d'une puissance de charge sur la base des informations de configuration de puissance, et le chargement du dispositif source sur la base de la puissance de charge.

6. Procédé selon l'une quelconque des revendications 1 à 5, dans lequel le dispositif source comprend un module d'effet lumineux, les premières informations de configuration comprennent des informations d'effet lumineux du module d'effet lumineux dans le premier effet d'affichage, et les informations d'effet lumineux comprennent l'une ou plusieurs des informations de couleur d'affichage, des informations de fréquence de changement de couleur et des informations de mode du module d'effet lumineux.

7. Procédé selon l'une quelconque des revendications 1 à 6, dans lequel le dispositif source comprend également un module d'horloge, les premières informations de configuration comprennent des informations d'horloge du dispositif source dans le premier effet d'affichage, et les informations d'horloge servent à la synchronisation de l'effet d'affichage entre le dispositif source et l'au moins un dispositif récepteur.

8. Procédé selon l'une quelconque des revendications 1 à 7, dans lequel, lorsque l'au moins un dispositif récepteur comprend deux ou plusieurs dispositifs récepteurs, une connexion est établie entre les deux ou plusieurs dispositifs récepteurs à l'aide de l'un quelconque des moyens suivants : Bluetooth, Wireless Fidelity, Wi-Fi, NFC (Near Field Communication) ou USB (Universal Serial Bus).

9. Système, dans lequel le système comprend un dispositif source (10) et au moins un dispositif récepteur (20), le dispositif source a un premier effet d'affichage et l'au moins un dispositif récepteur a un second effet d'affichage, dans lequel le dispositif source est configuré pour réaliser les étapes suivantes :
l'établissement (602) d'une connexion de charge sans fil à l'au moins un dispositif récepteur ;
la détermination (603) de premières informations de configuration sur la base du premier effet d'affichage ; et
l'envoi (604) des premières informations de configuration à l'au moins un dispositif récepteur à travers la connexion de charge sans fil ; et
l'au moins un dispositif récepteur est configuré pour réaliser l'étape suivante :
la modification synchrone (607, 609) du second effet d'affichage au premier effet d'affichage sur la base des premières informations de configuration.

10. Système selon la revendication 9, dans lequel le dispositif source comprend un premier module de charge sans fil, l'au moins un dispositif récepteur comprend un second module de charge sans fil, et le dispositif source est spécifiquement configuré pour réaliser les étapes suivantes :
la réception, à l'aide du premier module de charge sans fil, d'un premier signal d'impulsion envoyé par le second module de charge sans fil de l'au moins un dispositif récepteur ; et
le renvoi d'un deuxième signal d'impulsion à l'au moins un dispositif récepteur sur la base du premier signal d'impulsion, dans lequel le deuxième signal d'impulsion comprend un identifiant de l'au moins un dispositif récepteur ; et
l'au moins un dispositif récepteur est spécifiquement configuré pour réaliser l'étape suivante :
la détermination de l'au moins un dispositif récepteur en tant que dispositif cible sur la base de l'identifiant, et l'établissement d'une connexion sans fil au dispositif cible.

11. Système selon la revendication 10, dans lequel le dispositif source est spécifiquement configuré pour réaliser l'étape suivante :
l'envoi d'un troisième signal d'impulsion à l'au moins un dispositif récepteur à l'aide du premier module de charge sans fil, dans lequel le troisième signal d'impulsion comprend les premières informations de configuration.

12. Système selon la revendication 11, dans lequel le deuxième signal d'impulsion et le troisième signal d'impulsion ont des formats de paquets de communication et/ou des intervalles de transmission de paquets différents.

13. Système selon la revendication 11 ou 12, dans lequel le troisième signal d'impulsion comprend également des informations de configuration de puissance, et l'au moins un dispositif récepteur est spécifiquement configuré pour réaliser l'étape suivante :
la détermination d'une puissance de charge sur la base des informations de configuration de puissance, et le chargement du dispositif source sur la base de la puissance de charge.

14. Système selon l'une quelconque des revendications 9 à 13, dans lequel le dispositif source comprend un module d'effet lumineux, les premières informations de configuration comprennent des informations d'effet lumineux du module d'effet lumineux dans le premier effet d'affichage, et les informations d'effet lumineux comprennent l'une ou plusieurs des informations de couleur d'affichage, des informations de fréquence de changement de couleur et des informations de mode du module d'effet lumineux.

15. Support de stockage lisible par ordinateur, dans lequel le support de stockage lisible par ordinateur stocke des instructions informatiques, et lorsque les instructions informatiques sont exécutées sur un dispositif électronique, le dispositif électronique est activé pour réaliser le procédé selon l'une quelconque des revendications 1 à 8.
